# EUROPÄISCHE PATENTSCHRIFT

(11) **EP 1 713 858 B1**
(45) Veröffentlichungstag und Bekanntmachung des Hinweises auf die Patenterteilung: **04.07.2007**
(21) Anmeldenummer: 05701330.2
(22) Anmeldetag: 03.02.2005
(51) Int. Cl.: C08L 51/04, C08F 279/02

(54) **THERMOPLASTISCHE FORMMASSEN MIT VERBESSERTEN MECHANISCHEN UND OPTISCHEN EIGENSCHAFTEN**
THERMOPLASTIC MOULDING MATERIALS HAVING IMPROVED MECHANICAL AND OPTICAL PROPERTIES
MATIERES MOULABLES THERMOPLASTIQUES PRESENTANT DE MEILLEURES PROPRIETES MECANIQUES ET OPTIQUES

(30) Priorität: 06.02.2004 DE 102004006193
(43) Veröffentlichungstag der Anmeldung: 25.10.2006
(73) Patentinhaber: BASF Aktiengesellschaft, 67056 Ludwigshafen (DE)
(72) Erfinder: STORK, Martin, 68199 Mannheim (DE); WEBER, Martin, 67487 Maikammer (DE); GOTTSCHALK, Axel, 67435 Neustadt (DE); RIECHERS, Sven, Randolph Township, NJ 07869 (US); GÜNTHERBERG, Norbert, 67346 Speyer (DE); FISCHER, Wolfgang, 69190 Walldorf (DE); LEBER, Ludger, 67125 Dannstadt-Schauernheim (DE); ITTEMANN, Peter, 68623 Lampertheim (DE); JÜNGLING, Stephan, 68157 Mannheim (DE); DUIJZINGS, Wil, 6121 JL Born (NL)
(86) Internationale Anmeldenummer: PCT/EP2005/001068
(87) Internationale Veröffentlichungsnummer: WO 2005/075560

(56) Entgegenhaltungen:
- EP-A- 0 847 421
- DE-A1- 19 961 894
- DE-B1- 2 427 960
- US-A- 4 287 312

## Beschreibung

Die vorliegende Erfindung betrifft thermoplastische Formmassen, enthaltend eine Mischung aus
(A) 30 bis 69 Gew.-%, bezogen auf die Summe der Komponenten (A), (B) und (C), eines Methylmethacrylat-Polymerisates, erhältlich durch Polymerisation einer Mischung, bestehend aus
   (A1) 90 bis 100 Gew.-%, bezogen auf (A), Methylmethacrylat,und
   (A2) 0 bis 10 Gew.-%, bezogen auf (A), eines C₁-C₈-Alkylesters der Acrylsäure,
   und
(B) 30 bis 69 Gew.%, bezogen auf die Summe der Komponenten (A), (B) und (C), eines Copolymerisates, erhältlich durch Polymerisation einer Mischung, bestehend aus
   (B1) 75 bis 88 Gew.-%, bezogen auf (B), eines vinylaromatischen Monomeren und
   (B2) 12 bis 25 Gew.-%, bezogen auf (B), eines Vinylcyanids
   und
(C) 1 bis 40 Gew.-%, bezogen auf die Summe der Komponenten (A), (B) und (C), eines Pfropfcopolymerisates, erhältlich aus
   (C1) 60 bis 90 Gew.-%, bezogen auf (C), eines Kerns,
      und
   (C2) 5 bis 20 Gew.-%, bezogen auf (C), einer ersten Pfropfhülle, erhältlich durch Polymerisation eines Monomerengemisches, bestehend aus
      (C21) 30 bis 39 Gew.-%, bezogen auf (C2), eines vinylaromatischen Monomeren
      (C22) 61 bis 70 Gew.-%, bezogen auf (C2), eines C₁-C₈-Alkylesters der Methacrylsäure und
      (C23) 0 bis 3 Gew.-%, bezogen auf (C2), eines vernetzenden Monomeren,
      und
   (C3) 5 bis 20 Gew.-%, bezogen auf (C), einer zweiten Pfropfhülle, erhältlich durch Polymerisation eines Monomerengemisches, bestehend aus
      (C31) 70 bis 98 Gew.-%, bezogen auf (C3), eines C₁-C₈-Alkylesters der Methacrylsäure und
      (C32) 2 bis 30 Gew.-%, bezogen auf (C3), eines C₁-C₈-Alkylesters der Acrylsäure,
   und
(D) gegebenenfalls üblichen Zusatzstoffen in Mengen von bis zu 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt.

Weiterhin betrifft die vorliegende Erfindung ein Verfahren zur Herstellung der erfindungsgemäßen thermoplastischen Formmassen, deren Verwendung und die daraus erhältlichen Formkörper.

Aus WO 97/08241 sind Formmassen bekannt, die aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vinylaromat-Alkylmethacrylat-Polymerisat und eine zweite Pfropfhülle aus einem Alkyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus.

Zur Verbesserung der mechanischen Eigenschaften thermoplastischer Formmassen ist der Einsatz von kautschukelastischen Pfropfcopolymerisaten bekannt, bei denen der Pfropfkern aus vergleichsweise großen agglomerisierten Teilchen besteht, die während der Herstellung der Pfropfkerne durch Zugabe eines Agglomerisationspolymerisats erhältlich sind. Solche Formmassen auf Basis unterschiedlichster Kunststoffmatrices sowie deren Herstellverfahren sind beispielsweise beschrieben in WO 01/83574 und WO 02/10222. Üblicherweise weisen solche thermoplastischen Formmassen enthaltend Pfropfkerne aus vergleichsweise großen agglomerisierten Teilchen aber verschlechterte optische Eigenschaften auf.

Der vorliegenden Erfindung lag daher die Aufgabe zugrunde, thermoplastische Formmassen auf Basis harter Methylmethacrylat-Polymerisate, harter Vinylaromat-Vinylcyanid-Polymerisate und weicher Pfropfcopolymerisate zur Verfügung zu stellen, die bei verbesserten mechanischen Eigenschaften mindestens vergleichbar gute optische Eigenschaften, insbesondere eine vergleichbar gute Transparenz und niedrige Lichtstreuung, aufweisen.

Demgemäss wurden die eingangs definierten thermoplastischen Formmassen gefunden, wobei erfindungswesentlich ist, dass die mittlere Teilchengröße D₅₀ des Kerns (C1) (bestimmt nach der im folgenden beschriebenen Methode) im Bereich von 50 bis 250 nm liegt, die mittlere Teilchengröße D₉₀ des Kerns (C1) (bestimmt nach der in der Beschreibung genannten Methode) im Bereich von 60 bis 1000 nm liegt, die mittlere Teilchengröße D₉₀ des Kerns (C1) um einen Faktor im Bereich von 1,15 bis 20 größer ist als die mittlere Teilchengröße D₅₀ des Kerns (C1) und der Kern (C1) erhältlich ist durch Polymerisation eines Monomerengemisches, bestehend aus
(C11) 65 bis 89,9 Gew.-%, bezogen auf (C1), eines 1,3-Diens,
(C12) 10 bis 34,9 Gew.-% bezogen auf (C1), eines vinylaromatischen Monomeren, und
(C13) 0,1 bis 5 Gew.%, bezogen auf (C1), eines Agglomerationspolymerisates.

Des weiteren wurde ein Verfahren zu deren Herstellung, ihre Verwendung zur Herstellung von Formkörpern sowie Formkörper, enthaltend die erfindungsgemäßen thermoplastischen Formmassen, gefunden.

Die erfindungsgemäßen thermoplastischen Formmassen, Verfahren, Verwendungen und Formkörper werden im folgenden beschrieben.

Die erfindungsgemäßen thermoplastischen Formmassen enthalten
(A) 30 bis 69 Gew.-%, vorzugsweise von 32,5 bis 57,5 Gew.-%, jeweils bezogen auf die Summe der Komponenten (A), (B) und (C), eines Methylmethacrylat Polymerisates, erhältlich durch Polymerisation einer Mischung, bestehend aus
   (A1) 90 bis 100 Gew.-%, vorzugsweise von 92 bis 98 Gew.-%, jeweils bezogen auf (A), Methylmethacrylat, und
   (A2) 0 bis 10 Gew.-%, vorzugsweise von 2 bis 8 Gew.-%, jeweils bezogen auf (A), eines C₁-C₈-Alkylesters der Acrylsäure
(B) 30 bis 69 Gew.-%, vorzugsweise von 32,5 bis 57,5 Gew.-%, jeweils bezogen auf die Summe der Komponenten (A), (B) und (C), eines Copolymerisates, erhältlich durch Polymerisation einer Mischung, bestehend aus
   (B1) 75 bis 88 Gew.-%, vorzugsweise von 79 bis 85 Gew.-%, jeweils bezogen auf (B), eines vinylaromatischen Monomeren und
   (B2) 12 bis 25 Gew.-%, vorzugsweise von 15 bis 21 Gew.-%, jeweils bezogen auf (B), eines Vinylcyanids
   und
(C) 1 bis 40 Gew.-%, vorzugsweise von 10 bis 35 Gew.-%, jeweils bezogen auf die Summe der Komponenten (A), (B) und (C), eines Pfropfcopolymerisates, erhältlich aus
   (C1) 60 bis 90 Gew.%, vorzugsweise von 70 bis 80 Gew.-%, jeweils bezogen auf (C), eines Kerns mit einer mittleren Teilchengröße D₅₀ (bestimmt nach der im folgenden beschriebenen Methode) im Bereich von 50 bis 250 nm, bevorzugt von 80 bis 200 nm, besonders bevorzugt von 100 bis 180 nm, einer mittleren Teilchengröße D₉₀ (bestimmt nach der im folgenden beschriebenen Methode) im Bereich von 60 bis 1000 nm, bevorzugt von 120 bis 600 nm, besonders bevorzugt von 180 bis 500 nm, wobei die mittlere Teilchengröße D₉₀ um einen Faktor im Bereich von 1,15 bis 20, bevorzugt im Bereich von 1,5 bis 10, besonders bevorzugt im Bereich von 1,8 bis 6, größer ist als die mittlere Teilchengröße D₅₀, erhältlich durch Polymerisation eines Monomerengemisches, bestehend aus
      (C11) 65 bis 89,9 Gew.-%, vorzugsweise von 70 bis 84,5 Gew.-%, jeweils bezogen auf (C1), eines 1,3-Diens,
      (C12) 10 bis 34,9 Gew.-%, vorzugsweise von 15 bis 29,5 Gew.%, jeweils bezogen auf (C1), eines vinylaromatischen Monomeren, und
      (C13) 0,1 bis 5 Gew.-%, vorzugsweise von 0,1 bis 2 Gew.%, jeweils bezogen auf (C1), eines Agglomerationspolymerisates,
      und
   (C2) 5 bis 20 Gew.-%, vorzugsweise von 10 bis 15 Gew.-%, jeweils bezogen auf (C), einer ersten Pfropfhülle, erhältlich durch Polymerisation eines Monomerengemisches, bestehend aus
      (C21) 30 bis 39 Gew.-%, vorzugsweise von 30 bis 35 Gew.-%, besonders bevorzugt von 31 bis 35 Gew.-%, jeweils bezogen auf (C2), eines vinylaromatischen Monomeren
      (C22) 61 bis 70 Gew.-%, vorzugsweise von 63 bis 70 Gew.-%, besonders bevorzugt von 63 bis 68 Gew.-%, jeweils bezogen auf (C2), eines C₁-C₈-Alkylesters der Methacrylsäure und
      (C23) 0 bis 3 Gew.-%, vorzugsweise von 0 bis 2 Gew.-%, besonders bevorzugt von 1 bis 2 Gew.-%, jeweils bezogen auf (C2), eines vernetzenden Monomeren
      und
   (C3) 5 bis 20 Gew.-%, vorzugsweise von 10 bis 15 Gew.-%, jeweils bezogen auf (C), einer zweiten Pfropfhülle, erhältlich durch Polymerisation eines Monomerengemisches, bestehend aus
      (C31) 70 bis 98 Gew.-%, vorzugsweise von 75 bis 92 Gew.-%, jeweils bezogen auf (C3), eines C₁-C₈-Alkylesters der Methacrylsäure und
      (C32) 2 bis 30 Gew.%, vorzugsweise von 8 bis 25 Gew.-%, jeweils bezogen auf (C3), eines C₁-C₈-Alkylesters der Acrylsäure,
   und
(D) gegebenenfalls üblichen Zusatzstoffen in Mengen von bis 20 Gew.-%, vorzugsweise von 0 bis 10 Gew.-%, jeweils bezogen auf die Summe der Komponenten (A), (B) und (C).

Die in den erfindungsgemäßen thermoplastischen Formmassen verwendeten Methylmethacrylat-Polymerisate (A) sind entweder Homopolymerisate aus Methylmethacrylat (MMA) oder Copolymerisate aus MMA mit bis zu 10 Gew.-%, bezogen auf (A), eines C₁-C₈-Alkylesters der Acrylsäure.

Als C₁-C₈-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl--Hanser-Verlag 1975) und sind im Handel erhältlich. Bevorzugt setzt man Methylmethacrylat-Polymerisate ein, deren Gewichtsmittelwerte M_{w} der Molmassen im Bereich von 60.000 bis 300.000 g/mol liegen (bestimmt durch Lichtstreuung in Chloroform).

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit C₁-C₈-Alkylresten substituiertes Styrol wie p-Methylstyrol oder tert.-Butylstyrol sowie α-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung
der Komponente (B) erhält man üblicherweise bei Verarbeitungstemperaturen über 240°C trübe Formmassen, die Schlieren aufweisen.

Die Copolymerisate (B) können nach bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei Copolymerisate (B) mit Molmassen M_{w} von 60.000 bis 300.000 g/mol, bestimmt durch Lichtstreuung in Dimethylformamid.

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex QI von 15 bis 50, insbesondere von 20 bis 40 auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder vorzugsweise am Kern mit einer, vorzugsweise in α-Stellung, oder auch mehreren C₁-C₈-Alkylgruppe(n), vorzugsweise Methyl, substituiertes Styrol einsetzen.

Als Agglomerisationspolymerisat (Komponente C13) können dem Fachmann bekannte und beispielsweise in WO 01/83574, WO 02/10222 oder DE-A 24 27 960 beschriebene Stoffe eingesetzt werden. Als Agglomerationspolymerisate geeignet sind beispielsweise Dispersionen von Acrylesterpolymerisaten, bevorzugt von Copolymerisaten aus Ethylacrylat und Methacrylamid, in denen der Anteil an Methacrylamid 0,1 bis 20 Gew.-%, bezogen auf das Copolymerisat, beträgt. Die Konzentration der Acrylesterpolymerisate in der Dispersion beträgt vorzugsweise 3 bis 40 Gew.-%, besonders bevorzugt 5 bis 20 Gew.-%.

Die Herstellung des Kerns (C1) erfolgt in zwei Stufen nach dem Fachmann bekannten und beispielsweise in WO 01/83574 beschriebenen Verfahren. Üblicherweise stellt man in der ersten Stufe aus den Komponenten (C11) und (C12) nach dem Fachmann bekannten Verfahren der Emulsionspolymerisation (siehe beispielsweise Encyclopedia of Polymer Science and Engineering, Vol. 1, S. 401 ff) einen Kern her, der bevorzugt eine Glasübergangstemperatur von kleiner als 0°C aufweist, und dessen mittlere Teilchengröße D₅₀ in der Regel im Bereich von 30 bis 240 nm, bevorzugt im Bereich von 50 bis 180 nm, liegt. In einer zweiten Stufe erfolgt nach dem Fachmann bekannten und beispielsweise in WO 01/83574 beschriebenen Verfahren die Umsetzung des in der ersten Stufe erhaltenen Kerns mit dem Agglomerationspolymerisat (C13), wobei der Kern (C1) mit einer mittleren Teilchengröße D₅₀ (bestimmt nach der im folgenden beschriebenen Methode) im Bereich von 50 bis 250 nm, bevorzugt von 80 bis 200 nm, besonders bevorzugt von 100 bis 180 nm, einer mittleren Teilchengröße D₉₀ (bestimmt nach der im folgenden beschriebenen Methode) im Bereich von 60 bis 1000 nm, bevorzugt von 120 bis 600 nm, besonders bevorzugt 180 bis 500 nm, wobei die mittlere Teilchengröße D₉₀ um einen Faktor im Bereich von 1,15 bis 20, bevorzugt im Bereich von 1,5 bis 10, besonders bevorzugt im Bereich von 1,8 bis 6, größer ist als die mittlere Teilchengröße D₅₀, erhalten wird. In bevorzugten Ausführungsformen weist der Kern (C1) beispielsweise in WO 01/83574 beschriebene bimodale oder polymodale Teilchengrößenverteilungen auf, besonders bevorzugt ist eine bimodale Teilchengrößenverteilung.

Auf den Kern (C1) wird die Pfropfhülle (C2) aufgebracht, welche die Monomere (C21), (C22) und gegebenenfalls (C23) enthält.

Als vinylaromatisches Monomer (Komponente C21) kann man Styrol oder vorzugsweise am Kern mit einer, vorzugsweise in α-Stellung, oder auch mehreren C₁-C₈-Alkylgruppe(n), vorzugsweise Methyl, substituiertes Styrol einsetzen.

Als C₁-C₈-Alkylester der Methacrylsäure (Komponente C22) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di -oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die Pfropfhülle (C2) wiederum wird eine weitere Pfropfhülle (C3) aufgebracht, welche die Monomere (C31) und (C32) aufweist. Die Monomere (C31) sind C₁-C₈-Alkylester der Methacrylsäure, bei den Monomeren (C32) handelt es sich um C₁-C₈-Alkylester der Acrylsäure.

Als C₁-C₈-Alkylester der Methacrylsäure (Monomere C31) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als C₁-C₈-Alkylester der Acrylsäure (Monomere C32) kann man Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den lnitiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert. -Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, dass man eine wässrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wäßrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wässrige Lösungen von anorganischen Salzen wie Natriumchlorid, Natriumsulfat, Magnesiumsulfat und Calciumchlorid, wässrige Lösungen von Salzen der Ameisensäure wie Magnesiumformiat, Calciumformiat und Zinkformiat, wässrige Lösungen von anorganischen Säuren wie Schwefel- und Phosphorsäure sowie wäßrige ammoniakalische und aminische Lösungen sowie andere wässrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen.

Die Trocknung kann beispielsweise durch Gefrier-, Sprüh-, Wirbelschicht und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex Ql von 10 bis 40, insbesondere von 12 bis 35 auf. Der Quellungsindex wird dabei durch Quellungsmessung in Toluol bei Raumtemperatur bestimmt.

Als übliche Zusatzstoffe (D) kommen alle solchen Substanzen in Betracht, die sich in den Komponenten (A), (B) und (C) gut lösen, beziehungsweise mit diesen gut mischbar sind. Geeignete Zusatzstoffe sind u.a. Farbstoffe, Stabilisatoren, Schmiermittel und Antistatika.

Die Herstellung der erfindungsgemäßen Formmassen aus den Komponenten (A), (B), (C) und gewünschtenfalls (D) erfolgt nach dem Fachmann bekannten Verfahren, beispielsweise durch Mischen der Komponenten in der Schmelze mit dem Fachmann bekannten Vorrichtungen bei Temperaturen im Bereich von 200 bis 300°C, insbesondere bei 200 bis 280°C.

Die erfindungsgemäßen thermoplastischen Formmassen zeichnen sich ferner u.a. dadurch aus, dass das Gewichtsverhältnis der ersten Pfropfhülle (C2) zur zweiten Pfropfhülle (C3) im Bereich von 2:1 bis 1:2 liegt.

In einer bevorzugten Ausführungsform sind die erfindungsgemäßen thermoplastischen Formmassen dadurch charakterisiert, dass der Betrag der Differenz aus Brechungsindex (n_{D}-C) der Gesamtkomponente (C) und dem Brechungsindex (n_{D}-AB) der Gesamtmatrix der Komponenten (A) und (B) kleiner oder gleich 0,02, insbesondere kleiner oder gleich 0,015, ist.

Die genannten Brechungsindices sind jeweils nach den im folgenden noch genannten Methoden (siehe Beispiele) zu bestimmen.

Aus den erfindungsgemäßen thermoplastischen Formmassen können hauptsächlich durch Spritzgießen oder durch Formblasen Formteile hergestellt werden. Die thermoplastischen Formmassen können aber auch verpresst, kalandriert, extrudiert oder vakuumgeformt werden. Die erfindungsgemäßen thermoplastischen Formmassen zeichnen sich insbesonders durch gute mechanische und optische Eigenschaften aus.

### Beispiele

In den nachfolgenden erfindungsgemäßen Beispielen und den Vergleichsbeispielen wurden jeweils thermoplastische Formmassen hergestellt und folgende Eigenschaften ermittelt:

### Brechungsindex n_{D} [dimensionslos]:

Die Brechungsindices (n_{D}-C) und (n_{D}-AB) wurden an Folien gemessen, die aus den jeweiligen Polymeren (C) oder Polymermischungen aus den Komponenten (A) und (B) in einer IWK-Presse bei 200°C und einem Druck von 3 - 5 bar 2 min vorgepresst und abschließend bei 200°C und 200 bar 3 min nachgepresst wurden. Die Messungen wurden bei 20°C mit einem Abbé-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

### Quellungsindex QI [dimensionslos]:

Der Quellungsindex QI des Pfropfkempolymerisats (C1) wurde an Folien gemessen, die durch Trocknen der bei der im folgenden noch beschriebenen Herstellung der Kautschukkerne (C1) anfallenden Dispersion bei 50°C und 700-800 mbar über Nacht erhalten wurden.

Der Quellungsindex QI des Pfropfcopolymerisats (C) wurde an Folien gemessen, die aus den Pfropfcopolymerisaten (C) in einer IWK-Presse bei 200°C und einem Druck von 3 - 5 bar 2 min vorgepresst und abschließend bei 200°C und 200 bar 3 min nachgepresst wurden.

Ein Stück der jeweiligen Folien wurde mit Toluol versetzt. Nach 24 Stunden wurde dekantiert und die gequollene Folie gewogen. Die gequollene Folie wurde im Vakuum bei bis zu 120°C bis zur Gewichtskonstanz getrocknet und wiederum gewogen. Der Quellungsindex ergibt sich als Quotient aus dem Gewicht der gequollenen Folie und dem Gewicht der getrockneten Folie.

### Kerbschlagzähigkeit aₖ [kJ/m²]:

Die Kerbschlagzähigkeit aₖ wurde gemäß ISO 179-2/1eA(F) bei 23°C bestimmt.

### Transmission [%]:

Die Transmission wurde gemäß DIN 53236 an Platten mit einer Dicke von 2 mm bestimmt.

### Haze [%]:

Als Maß für die Lichtstreung wurde der Haze-Wert gemäß ASTM D 1003 an Probekörpern mit einer Dicke von 2 mm bestimmt.

### Teilchengröße D₅₀ bzw. D₉₀ [nm]:

Die mittlere Teilchengröße und die Teilchengrößenverteilung der Pfropfcopolymerisat-Kerne (C1) wurden aus der integralen Massenverteilung bestimmt. Bei den mittleren Teilchengrößen handelt es sich in allen Fällen um das Gewichtsmittel der Teilchengrö-ßen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Größe haben. Der mittlere Teilchendurchmesser, der auch als D₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem D₅₀-Wert entspricht. Ebenso haben dann 50 Gew.-% der Teilchen einen größeren Durchmesser als der D₅₀-Wert. Der D₉₀-Wert ist als der Teilchendurchmesser definiert, bei dem 90 Gew.-% der Teilchen einen kleineren Durchmesser haben als der Durchmesser, der dem D₈₀-Wert entspricht.

### Herstellung der Formmassen:

Als Komponente A wurde ein Copolymerisat aus 95,5 Gew.% Methylmethacrylat und 4,5 Gew.% Methylacrylat mit einer Viskositätszahl VZ von 70 ml/g eingesetzt (bestimmt als 0,5 Gew.%-ige Lösung in Dimethylformamid bei 23°C nach DIN 53727).

Als Komponente B wurde ein Copolymerisat aus 81 Gew.-% Styrol und 19 Gew.-% Acrylnitril mit einer Viskositätszahl VZ von 60 ml/g eingesetzt (bestimmt als 0,5 Gew.%-ige Lösung in Dimethylformamid bei 23°C nach DIN 53727).

Die Komponenten C wurden wie folgt hergestellt:

In einer ersten Stufe wurden Grundstufen für die Pfropfkerne C1 hergestellt, indem jeweils eine Lösung aus 186 Gew.-Teilen Wasser, 0,36 Gew.-Teilen Natriumbicarbonat, 0,02 Gew.-Teilen Kaliumperoxodisulfat und 0,72 Gew.-Teilen Kaliumstearat zunächst mit Stickstoff inertisiert und auf 75°C temperiert wurde. Anschließend wurden unter Rühren innerhalb von 5 h eine Mischung aus 1 Gew.-Teil tert.-Dodecylmercaptan und den in Tabelle 1 genannten jeweiligen Gewichtsteilen Butadien und Styrol zugegeben. Gleichzeitig wurden 0,18 Gew.-Teile Kaliumperoxodisulfat, gelöst in 15 Gew.-Teilen Wasser, innerhalb dieser 5 h zugegeben. Man polymerisierte bis zu einem Umsatz von mindestens 95 %.

Die so erhaltenen Grundstufen für die Pfropfkerne C1 wiesen einen mittleren Teilchendurchmesser D₅₀ von 133 nm, einen mittleren Teilchendurchmesser D₉₀ von 143 nm und einen Quellungsindex QI von 22 auf.

Anschließend wurden den so hergestellten Grundstufen für Pfropfkerne C1 die in Tabelle 1 genannten Gewichtsteile eines Agglomerationspolymerisats bestehend aus 94 Gew.-% Ethylacrylat und 6 Gew.% Methacrylamid mit einem mittleren Teilchendurchmesser D₅₀ von 82 nm in Form einer wäßrigen Dispersion mit einem Feststoffgehalt von 20 Gew.% zugesetzt. Die so erhaltenen Pfropfkerne C1 wiesen die in Tabelle 3 genannten mittleren Teilchendurchmesser auf.

Aus den in der ersten Stufe erhaltenen Reaktionsmischungen enthaltend die Pfropfkerne C1 wurden jeweils durch zweistufige Pfropfcopolymerisation in der nachfolgend beschriebenen Weise die Pfropfcopolymerisate C hergestellt.

Dabei wurden folgende Abkürzungen verwendet.

| | | | |
|---|---|---|---|
| Bu | Butadien | BA | Butylacrylat |
| S | Styrol | BDDA | Butandioldiacrylat |
| MMA | Methylmethacrylat | Aggl | Agglomerationspolymerisat |

Die Reaktionsmischung enthaltend jeweils die in Tabelle 1 angegebenen Gew.-Teile Pfropfkerne C1 wurde vorgelegt und mit Stickstoff inertisiert. Anschließend fügte man jeweils 0,1 Gew.-Teile Kaliumstearat und 0,04 Gew.-Teile Kaliumperoxodisulfat in 10 Gew.-Teilen Wasser hinzu. Diese Mischung wurde jeweils bei 70°C innerhalb von 1,5 h mit den in Tabelle 1 wiedergegebenen Gew.-Teilen einer Mischung der die erste Pfropfhülle C2 aufbauenden Monomere versetzt, wobei die letztgenannte Mischung jeweils aus den in Tabelle 1 genannten Gew.-Teilen S, MMA und BDDA bestand. Nach Zulaufende wurde die Polymerisation zum Aufbau der ersten Pfropfhülle C2 15 min fortgesetzt.

Zu den so erhaltenen Reaktionsmischungen wurden jeweils innerhalb von 1,5 h die in Tabelle 1 wiedergegebenen Gew.-Teile einer Mischung der die zweite Pfropfhülle C3 aufbauenden Monomere zugegeben, wobei die letztgenannte Mischung jeweils aus den in Tabelle 1 genannten Gew.-Teilen MMA und BA bestand. Die Polymerisation zum Aufbau der zweiten Pfropfhülle C3 wurde anschließend 60 Minuten lang fortgesetzt. Anschließend fügte man jeweils weitere 0,04 Gew.-Teile Kaliumperoxodisulfat in 10 Gew.-Teilen Wasser hinzu und polymerisierte 1,5 h nach.

Die so erhaltenen Pfropfcopolymerisate C wurden danach durch Fällung mit einer 1 Gew.-%igen Magnesiumsulfatlösung isoliert und nach dem Waschen mit Wasser bei 60°C im Vakuum 24 Stunden lang getrocknet.

Aus den in Tabelle 1 angegebenen Gew.-Teilen der Komponenten A, B, C, und jeweils 0,2 Gew.-Teilen Calciumstearat wurden in einer Schmelze bei Temperaturen von 250°C die in Tabelle 1 wiedergegeben erfindungsgemäße Formmasse 1 und die zum Vergleich dienenden Formmassen V1-V3 hergestellt.

**Tabelle 1:**

| Formmasse**** | A* | B* | C* | Zusammensetzung C | | | | | |
|---|---|---|---|---|---|---|---|---|---|
| | | | | C1** | Zusammensetzung C1*** | C2** | Zusammensetzung C2*** | C3** | Zusammensetzung C3*** |
| 1. | 34,9 | 37,9 | 27 | 80 | 72,9 Bu - 26,9 S - 0,2 Aggl | 10 | 33,0 S - 66,0 MMA -1 BDDA | 10 | 85 MMA -15 BA |
| V1 | 0 | 72,8 | 27 | 80 | 72,9 Bu - 26,9 S - 0,2 Aggl | 10 | 33,0 S - 66,0 MMA -1 BDDA | 10 | 85 MMA -15 BA |
| V2 | 72,8 | 0 | 27 | 80 | 72,9 Bu - 26,9 S -0,2 Aggl | 10 | 33,0 S - 66,0 MMA -1 BDDA | 10 | 85 MMA -15 BA |
| V3 | 34,3 | 38,5 | 27 | 80 | 73 Bu - 27 S - 0 Aggl | 10 | 33,0 S-66,0 MMA-1 BDDA | 10 | 85 MMA -15 BA |

| | | | | | | | | | |
|---|---|---|---|---|---|---|---|---|---|
| * Gew.-teile der Komponenten A, B und C, aus denen die Formmassen bestehen (jede Formmasse enthält außerdem 0,2 Gew.-Teile Calciumstearat), wobei sich die Summe der Gew.-Teile von A, B, C und Calciumstearat zu 100 addiert. ** Gew.-Teile der Komponenten C1, C2 und C3, aus denen die Pfropfcopolymerisate C bestehen, wobei sich die Summe der Gew.-Teile C1, C2 und C3 zu 100 addiert. *** Gew.-Teile und Art der Monomere, aus denen die jeweiligen Komponenten C1, C2 und C3 bestehen, wobei sich die jeweilige Summe der Monomeren zu 100 addiert (Bu = 1,3-Butadien, S = Styrol, BDDA = Butandioldiacrylat, MMA = Methylmethacrylat, BA = Butylacrylat, Aggl = Agglomerationspolymerisat) **** mit V gekennzeichnete Formmassen sind nicht erfindungsgemäß und dienen zum Vergleich. | | | | | | | | | |

Die Komponenten (A) und (B) bildeten die Matrix der Formmassen, die Komponente (C) stellte den Kautschuk dar.

In der nachfolgenden Tabelle 2 sind für die erfindungsgemäße Formmasse 1 und für die zum Vergleich dienenden Formmassen V1 bis V3 die Brechungsindices (n_{D}-C) der Gesamtkomponenten (C) und die Brechungsindices (n_{D}-AB) der Gesamtmatrix der Komponenten (A) und (B) aufgeführt. Weiterhin wird der Betrag der jeweiligen Differenz dieser Brechungsindices angegeben.

**Tabelle 2**

| Formmasse ***** | (n_{D}-C) | (n_{D}-AB) | Betrag [(n_{D}-C) - (n_{D}-AB)] |
|---|---|---|---|
| | | | |
| 1 | 1,5352 | 1,5351 | 0,001 |
| V1 | 1,5352 | 1,5748 | 0,0396 |
| V2 | 1,5352 | 1,4921 | 0,0431 |
| V3 | 1,5358 | 1,5358 | 0,000 |

| | | | |
|---|---|---|---|
| ***** mit V gekennzeichnete Formmassen sind nicht erfindungsgemäß und dienen zum Vergleich. | | | |

In der nachfolgenden Tabelle 3 sind sowohl für die erfindungsgemäße Formmasse 1 als auch für die zum Vergleich dienenden Formmassen V1 bis V3 die mittleren Teilchengrößen D₅₀, D₉₀ sowie das Verhältnis D₅₀/D₉₀, die Kerbschlagzähigkeit aₖ und die optischen Eigenschaften Transmission und Haze wiedergegeben.

**Tabelle 3:**

| Formmasse | 1 | V1 | V2 | V3 |
|---|---|---|---|---|
| D₅₀ [nm] des Pfropfkerns C1 | 158 | 158 | 158 | 148 |
| D₉₀ [nm] des Pfropfkerns C1 | 348 | 348 | 348 | 161 |
| D₉₀/D₅₀ | 2,20 | 2,20 | 2,20 | 1,09 |
| aₖ [kJ/m²] | 16,4 | 16,9 | 16,1 | 8,1 |
| Transmission [%] | 85,8 | n.b.* | n.b.* | 86,6 |
| Haze [%] | 9,6 | n.b.* | n.b.* | 10,0 |

| | | | | |
|---|---|---|---|---|
| * nicht bestimmbar, opak | | | | |

Die Beispiele belegen die bei verbesserten mechanischen Eigenschaften vergleichsweise guten oder verbesserten optischen Eigenschaften der erfindungsgemäßen thermoplastischen Formmassen gegenüber bekannten Formmassen.

## Patentansprüche

1. Thermoplastische Formmassen, enthaltend eine Mischung aus
(A) 30 bis 69 Gew.-%, bezogen auf die Summe der Komponenten (A), (B) und (C), eines Methylmethacrylat-Polymerisates, erhältlich durch Polymerisation einer Mischung, bestehend aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
(B) 30 bis 69 Gew.-%, bezogen auf die Summe der Komponenten (A), (B) und (C), eines Copolymerisates, erhältlich durch Polymerisation einer Mischung, bestehend aus
(B1) 75 bis 88 Gew.-%, bezogen auf (B), eines vinylaromatischen Monomeren und
(B2) 12 bis 25 Gew.-%, bezogen auf (B), eines Vinylcyanids
und
(C) 1 bis 40 Gew.-%, bezogen auf die Summe der Komponenten (A), (B) und (C), eines Pfropfcopolymerisates, erhältlich aus
(C1) 60 bis 90 Gew.-%, bezogen auf (C), eines Kerns,
und
(C2) 5 bis 20 Gew.-%, bezogen auf (C), einer ersten Pfropfhülle, erhältlich durch Polymerisation eines Monomerengemisches, bestehend aus
(C21) 30 bis 39 Gew.-%, bezogen auf (C2), eines vinylaromatischen Monomeren
(C22) 61 bis 70 Gew.-%, bezogen auf (C2), eines C₁-C₈-Alkylesters der Methacrylsäure und
(C23) 0 bis 3 Gew.-%, bezogen auf (C2), eines vernetzenden Monomeren,
und
(C3) 5 bis 20 Gew.-%, bezogen auf (C), einer zweiten Pfropfhülle, erhältlich durch Polymerisation eines Monomerengemisches, bestehend aus
(C31) 70 bis 98 Gew.-%, bezogen auf (C3), eines C₁-C₈-Alkylesters der Methacrylsäure und
(C32) 2 bis 30 Gew.-%, bezogen auf (C3), eines C₁-C₈-Alkylesters der Acrylsäure,
und
(D) gegebenenfalls üblichen Zusatzstoffen in Mengen von bis zu 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt,
**dadurch gekennzeichnet, dass** die mittlere Teilchengröße D₅₀ des Kerns (C1) (bestimmt nach der in der Beschreibung genannten Methode) im Bereich von 50 bis 250 nm liegt, die mittlere Teilchengröße D₉₀ des Kerns (C1) (bestimmt nach der in der Beschreibung genannten Methode) im Bereich von 60 bis 1000 nm liegt, die mittlere Teilchengröße D₉₀ des Kerns (C1) um einen Faktor im Bereich von 1,15 bis 20 größer ist als die mittlere Teilchengröße D₅₀ des Kerns (C1) und der Kern (C1) erhältlich ist durch Polymerisation eines Monomerengemisches, bestehend aus
(C11) 65 bis 89,9 Gew.-%, bezogen auf (C1), eines 1,3-Diens,
(C12) 10 bis 34,9 Gew.-% bezogen auf (C1), eines vinylaromatischen Monomeren, und
(C13) 0,1 bis 5 Gew.-%, bezogen auf (C1), eines Agglomerationspolymerisates.

2. Thermoplastische Formmassen nach Anspruch 1, **dadurch gekennzeichnet, daß** der Betrag der Differenz aus Brechungsindex (np-C) der Gesamtkomponente (C) und dem Brechungsindex (n_{D}-AB) der Gesamtmatrix der Komponenten (A) und (B) kleiner oder gleich 0,02 ist, wobei die Brechungsindices jeweils nach den in der Beschreibung genannten Methoden bestimmt werden.

3. Thermoplastische Formmassen nach Anspruch 1 oder 2, **dadurch gekennzeichnet, dass** die mittlere Teilchengröße D₅₀ des Kerns (C1) (bestimmt nach der in der Beschreibung genannten Methode) im Bereich von 80 bis 200 nm liegt, die mittlere Teilchengröße-D₉₀ des Kerns (C1) (bestimmt nach der in der Beschreibung genannten Methode) im Bereich von 120 bis 600 nm liegt und die mittlere Teilchengröße D₉₀ des Kerns (C1) um einen Faktor im Bereich von 1,5 bis 10 größer ist als die mittlere Teilchengröße D₅₀ des Kerns (C1).

4. Thermoplastische Formmassen nach einem der Ansprüche 1 bis 3, **dadurch gekennzeichnet, dass** die Teilchengrößenverteilung des Kerns (C1) bimodal oder polymodal ist.

5. Thermoplastische Formmassen nach einem der Ansprüche 1 bis 4, wobei als vinylaromatisches Monomeres Styrol verwendet wird.

6. Thermoplastische Formmassen nach einem der Ansprüche 1 bis 5, wobei das Pfropfcopolymerisat (C) einen Quellungsindex QI von 10 bis 40 aufweist, wobei der Quellungsindex QI nach der in der Beschreibung genannten Methoden bestimmt wird.

7. Verfahren zur Herstellung der thermoplastischen Formmassen gemäß einem der Ansprüche 1 bis 6, **dadurch gekennzeichnet, dass** man
(A) 30 bis 69 Gew.-%, bezogen auf die Summe der Komponenten (A), (B) und (C), eines Methylmethacrylat-Polymerisates, erhältlich durch Polymerisation einer Mischung, bestehend aus
(A1) 90 bis 100 Gew.-%, bezogen auf (A), Methylmethacrylat,und
(A2) 0 bis 10 Gew.-%, bezogen auf (A), eines C₁-C₈-Alkylesters der Acrylsäure, und
(B) 30 bis 69 Gew.-%, bezogen auf die Summe der Komponenten (A), (B) und (C), eines Copolymerisates, erhältlich durch Polymerisation einer Mischung, bestehend aus
(B1) 75 bis 88 Gew.-%, bezogen auf (B), eines vinylaromatischen Monomeren und
(B2) 12 bis 25 Gew.-%, bezogen auf (B), eines Vinylcyanids
und
(C) 1 bis 40 Gew.-%, bezogen auf die Summe der Komponenten (A), (B) und (C), eines Pfropfcopolymerisates, erhältlich aus
(C1) 60 bis 90 Gew.-%, bezogen auf (C), eines Kerns mit einer mittleren Teilchengröße D₅₀ (bestimmt nach der in der Beschreibung genannten Methode) im Bereich von 50 bis 250 nm, einer mittleren Teilchengröße D₉₀ (bestimmt nach der in der Beschreibung genannten Methode) im Bereich von 60 bis 1000 nm, wobei die mittlere Teilchengröße D₉₀ um einen Faktor im Bereich von 1,15 bis 20 größer ist als die mittlere Teilchengröße D₅₀ ist, erhältlich durch Polymerisation eines Monomerengemisches, bestehend aus
(C11) 65 bis 89,9 Gew.-%, bezogen auf (C1), eines 1,3-Diens,
(C12) 10 bis 34,9 Gew.-% bezogen auf (C1), eines vinylaromatischen Monomeren, und
(C13) 0,1 bis 5 Gew.-%, bezogen auf (C1), eines Agglomerationspolymerisates
und
(C2) 5 bis 20 Gew.-%, bezogen auf (C), einer ersten Pfropfhülle, erhältlich durch Polymerisation eines Monomerengemisches, bestehend aus
(C21) 30 bis 39 Gew.-%, bezogen auf (C2), eines vinylaromatischen Monomeren
(C22) 61 bis 70 Gew.-%, bezogen auf (C2), eines C₁-C₈-Alkylesters der Methacrylsäure und
(C23) 0 bis 3 Gew.-%, bezogen auf (C2), eines vernetzenden Monomeren.
und
(C3) 5 bis 20 Gew.-%, bezogen auf (C), einer zweiten Pfropfhülle, erhältlich durch Polymerisation eines Monomerengemisches, bestehend aus
(C31) 70 bis 98 Gew.-%, bezogen auf (C3), eines C₁-C₈-Alkylesters der Methacrylsäure und
(C32) 2 bis 30 Gew.-%, bezogen auf (C3), eines C₁-C₈-Alkylesters der Acrylsäure,
und
(D) gegebenenfalls üblichen Zusatzstoffen in Mengen von bis zu 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt,
durch Vermischen der Komponenten (A), (B), (C) und gegebenenfalls (D) in der Schmelze.

8. Verwendung der thermoplastischen Formmassen gemäß einem der Ansprüche 1 bis 6 zur Herstellung von Formkörpern.

9. Formkörper, enthaltend thermoplastische Formmassen gemäß einem der Ansprüche 1 bis 6.

## Claims

1. A thermoplastic molding composition, comprising a mixture composed of
(A) from 30 to 69% by weight, based on the entirety of components (A), (B) and (C), of a methyl methacrylate polymer, obtainable via polymerization of a mixture, composed of
(A1) from 90 to 100% by weight, based on (A), of methyl methacrylate, and
(A2) from 0 to 10% by weight, based on (A), of a C₁-C₈-alkyl ester of acrylic acid, and
(B) from 30 to 69% by weight, based on the entirety of components (A), (B) and (C), of a copolymer, obtainable via polymerization of a mixture, composed of
(B1) from 75 to 88% by weight, based on (B), of a vinylaromatic monomer, and
(B2) from 12 to 25% by weight, based on (B), of a vinyl cyanide,
and
(C) from 1 to 40% by weight, based on the entirety of components (A), (B) and (C), of a graft copolymer, obtainable from
(C1) from 60 to 90% by weight, based on (C), of a core,
and
(C2) from 5 to 20% by weight, based on (C), of a first graft shell, obtainable via polymerization of a monomer mixture composed of
(C21) from 30 to 39% by weight, based on (C2), of a vinylaromatic monomer
(C22) from 61 to 70% by weight, based on (C2), of a C₁-C₈-alkyl ester of methacrylic acid, and
(C23) from 0 to 3% by weight, based on (C2), of a crosslinking monomer,
and
(C3) from 5 to 20% by weight, based on (C), of a second graft shell, obtainable via polymerization of a monomer mixture, composed of
(C31) from 70 to 98% by weight, based on (C3), of a C₁-C₈-alkyl ester of methacrylic acid, and
(C32) from 2 to 30% by weight, based on (C3), of a C₁-C₈-alkyl ester of acrylic acid,
and
(D) if appropriate, amounts of up to 20% by weight, based on the entirety of components (A), (B), and (C), of conventional additives,
with the proviso that the ratio (C2):(C3) by weight is in the range from 2:1 to 1:2,
wherein the average particle size D₅₀ of the core (C1) (determined by the method mentioned in the Description) is in the range from 50 to 250 nm, the average particle size D₉₀ of the core (C1) (determined by the method mentioned in the Description) is in the range from 60 to 1000 nm, the average particle size D₉₀ of the core (C1) is greater by a factor in the range from 1.15 to 20 than the average particle size D₅₀ of the core (C1), and the core (C1) is obtainable via polymerization of a monomer mixture, composed of
(C11) from 65 to 89.9% by weight, based on (C1), of a 1,3-diene,
(C12) from 10 to 34.9% by weight, based on (C1), of a vinylaromatic monomer, and
(C13) from 0.1 to 5% by weight, based on (C1), of an agglomeration polymer.

2. The thermoplastic molding composition according to claim 1, wherein the extent of the difference of refractive index (n_{D}-C) of the entire component (C) from the refractive index (n_{D}-AB) of the entire matrix of components (A) and (B) is smaller than or equal to 0.02, where each refractive index is determined by the methods mentioned in the Description.

3. The thermoplastic molding composition according to claim 1 or 2, wherein the average particle size D₅₀ of the core (C1) (determined by the method mentioned in the Description) is in the range from 80 to 200 nm, the average particle size D₉₀ of the core (C1) (determined by the method mentioned in the Description) is in the range from 120 to 600 nm, the average particle size D₉₀ of the core (C1) is greater by a factor in the range from 1.5 to 10 than the average particle size D₅₀ of the core (C1).

4. The thermoplastic molding composition according to any of claims 1 to 3, wherein the particle size distribution of the core (C1) is bimodal or polymodal.

5. The thermoplastic molding composition according to any of claims 1 to 4, where the vinylaromatic monomer used comprises styrene.

6. The thermoplastic molding composition according to any of claims 1 to 5, where the graft copolymer (C) has a swelling index SI of from 10 to 40, where the swelling index SI is determined by the method mentioned in the Description.

7. A process for preparing the thermoplastic molding compositions according to any of claims 1 to 6, which comprises
(A) from 30 to 69% by weight, based on the entirety of components (A), (B) and (C), of a methyl methacrylate polymer, obtainable via polymerization of a mixture, composed of
(A1) from 90 to 100% by weight, based on (A), of methyl methacrylate, and
(A2) from 0 to 10% by weight, based on (A), of a C₁-C₈-alkyl ester of acrylic acid, and
(B) from 30 to 69% by weight, based on the entirety of components (A), (B) and (C), of a copolymer, obtainable via polymerization of a mixture, composed of
(B1) from 75 to 88% by weight, based on (B), of a vinylaromatic monomer, and
(B2) from 12 to 25% by weight, based on (B), of a vinyl cyanide,
and
(C) from 1 to 40% by weight, based on the entirety of components (A), (B) and (C), of a graft copolymer, obtainable from
(C1) from 60 to 90% by weight, based on (C), of a core with an average particle size D₅₀ (determined by the method mentioned in the Description) in the range from 50 to 250 nm, and with an average particle size D₉₀ (determined by the method mentioned in the Description) in the range from 60 to 1000 nm, where the average particle size D₉₀ is greater by a factor in the range from 1.15 to 20 than the average particle size D₅₀, obtainable via polymerization of a monomer mixture,composed of
(C11) from 65 to 89.9% by weight, based on (C1), of a 1,3-diene,
(C12) from 10 to 34.9% by weight, based on (C1), of a vinylaromatic monomer, and
(C13) from 0.1 to 5% by weight, based on (C1), of an agglomeration polymer,
and
(C2) from 5 to 20% by weight, based on (C), of a first graft shell, obtainable via polymerization of a monomer mixture composed of
(C21) from 30 to 39% by weight, based on (C2), of a vinylaromatic monomer
(C22) from 61 to 70% by weight, based on (C2), of a C₁-C₈-alkyl ester of methacrylic acid, and
(C23) from 0 to 3% by weight, based on (C2), of a crosslinking monomer,
and
(C3) from 5 to 20% by weight, based on (C), of a second graft shell, obtainable via polymerization of a monomer mixture, composed of
(C31) from 70 to 98% by weight, based on (C3), of a C₁-C₈-alkyl ester of methacrylic acid, and
(C32) from 2 to 30% by weight, based on (C3), of a C₁-C₈-alkyl ester of acrylic acid,
and
(D) if appropriate, amounts of up to 20% by weight, based on the entirety of components (A), (B), and (C), of conventional additives,
with the proviso that the ratio (C2):(C3) by weight is in the range from 2:1 to 1:2,
by mixing components (A), (B), (C), and, if appropriate, (D) in the melt.

8. The use of the thermoplastic molding compositions according to any of claims 1 to 6 for producing moldings.

9. A molding, comprising thermoplastic molding compositions according to any of claims 1 to 6.

## Revendications

1. Matières moulables thermoplastiques, contenant un mélange de
(A) 30 à 69% en poids, par rapport à la somme des composants (A), (B) et (C), d'un polymère de méthacrylate de méthyle, que l'on peut obtenir par polymérisation d'un mélange constitué de
(A1) 90 à 100% en poids, par rapport à (A), de méthacrylate de méthyle et
(A2) 0 à 10% en poids, par rapport à (A), d'un ester alkylique en C₁ à C₈ de l'acide acrylique, et
(B) de 30 à 69% en poids, par rapport à la somme des composants (A), (B) et (C), d'un copolymère que l'on peut obtenir par polymérisation d'un mélange constitué de
(B1) 75 à 88% en poids, par rapport à (B), d'un monomère vinylaromatique et
(B2) 12 à 25% en poids, par rapport à (B), d'un cyanure de vinyle et
(C) de 1 à 40% en poids, par rapport à la somme des composants (A), (B) et (C), d'un copolymère greffé que l'on peut obtenir à partir de
(C1) 60 à 90% en poids, par rapport à (C), d'un noyau,
et
(C2) 5 à 20% en poids, par rapport à (C), d'une première enveloppe de greffage, que l'on peut obtenir par polymérisation d'un mélange de monomères constitué de
(C21) 30 à 39% en poids, par rapport à (C2), d'un monomère vinylaromatique,
(C22) 61 à 70% en poids, par rapport à (C2), d'un ester alkylique en C₁ à C₈ de l'acide méthacrylique, et
(C23) 0 à 3% en poids, par rapport à (C2), d'un monomère réticulant,
et
(C3) 5 à 20% en poids, par rapport à (C), d'une deuxième enveloppe de greffage, que l'on peut obtenir par polymérisation d'un mélange de monomères constitué de
(C31) 70 à 98% en poids, par rapport à (C3), d'un ester alkylique en C₁ à C₈ de l'acide méthacrylique et
(C32) 2 à 30% en poids, par rapport à (C3), d'un ester alkylique en C₁ à C₈ de l'acide acrylique,
et
(D) le cas échéant des additifs usuels en des quantités allant jusqu'à 20% en poids, par rapport à la somme des composants (A), (B) et (C),
à la condition que le rapport pondéral de (C2) à (C3) soit de l'ordre de 2:1 à 1:2,
**caractérisées en ce que** la taille moyenne de particules D₅₀ du noyau (C1) (déterminée par la méthode indiquée dans la description) est de l'ordre de 50 à 250 nm, la taille moyenne de particules D₉₀ du noyau (C1), (déterminée par la méthode indiquée dans la description), est de l'ordre de 60 à 1000 nm, la taille moyenne de particules D₉₀ du noyau (C1) est supérieure d'un facteur de 1,15 à 20 à la taille moyenne de particules D₅₀ du noyau (C1) et le noyau (C1) peut être obtenu par polymérisation d'un mélange de monomères constitué de
(C11) 65 à 89,9% en poids, par rapport à (C1), d'un 1,3-diène,
(C12)10 à 34,9% en poids, par rapport à (C1), d'un monomère vinylaromatique, et
(C13) 0,1 à 5% en poids, par rapport à (C1), d'un polymère d'agglomération.

2. Matières moulables thermoplastiques suivant la revendication 1, **caractérisées en ce que** le montant de la différence de l'indice de réfraction (η_{D}-C) du composant global (C) et de l'indice de réfraction (η_{D}-AB) de la matrice globale des composants (A) et (B) est inférieur ou égal à 0,02, les indices de réfraction étant à chaque fois déterminés par la méthode indiquée dans la description.

3. Matières moulables thermoplastiques suivant la revendication 1 ou 2, **caractérisées en ce que** la taille moyenne de particules D₅₀ du noyau (C1) (déterminée par la méthode indiquée dans la description), est de l'ordre de 80 à 200 nm, la taille moyenne de particules D₉₀ du noyau (C1) (déterminée par la méthode indiquée dans la description), est de l'ordre de 120 à 600 nm et la taille moyenne de particules D₉₀ du noyau (C1) est supérieure d'un facteur de 1,5 à 10 à la taille moyenne de particules D₅₀ du noyau (C1).

4. Matières moulables thermoplastiques suivant l'une quelconque des revendications 1 à 3, **caractérisées en ce que** la distribution de taille des particules du noyau (C1) est bimodale ou polymodale.

5. Matières moulables thermoplastiques suivant l'une quelconque des revendications 1 à 4, dans lesquelles on utilise du styrène en tant que monomère vinylaromatique.

6. Matières moulables thermoplastiques suivant l'une quelconque des revendications 1 à 5, dans lesquelles le copolymère greffé (C) présente un indice de gonflement IG de 10 à 40, l'indice de gonflement IG étant déterminé par la méthode indiquée dans la description.

7. Procédé de préparation des matières moulables thermoplastiques suivant l'une quelconque des revendications 1 à 6, **caractérisé en ce que** l'on utilise
(A) 30 à 69% en poids, par rapport à la somme des composants (A), (B) et (C), d'un polymère de méthacrylate de méthyle, que l'on peut obtenir par polymérisation d'un mélange constitué de
(A1) 90 à 100% en poids, par rapport à (A), de méthacrylate de méthyle et
(A2) 0 à 10% en poids, par rapport à (A), d'un ester alkylique en C₁ à C₈ de l'acide acrylique, et
(B) de 30 à 69% en poids, par rapport à la somme des composants (A), (B) et (C), d'un copolymère que l'on peut obtenir par polymérisation d'un mélange constitué de
(B1) 75 à 88% en poids, par rapport à (B), d'un monomère vinylaromatique et
(B2) 12 à 25% en poids, par rapport à (B), d'un cyanure de vinyle
et
(C) 1 à 40% en poids, par rapport à la somme des composants (A), (B) et (C), d'un copolymère greffé que l'on peut obtenir à partir de
(C1) 60 à 90% en poids, par rapport à (C), d'un noyau, ayant une taille moyenne de particules D₅₀ (déterminée par la méthode indiquée dans la description) de l'ordre de 50 à 250 nm, une taille moyenne de particules D₉₀ (déterminée par la méthode indiquée dans la description) de l'ordre de 60 à 1000 nm, la taille moyenne de particules D₉₀ étant supérieure d'un facteur de 1,15 à 20 à la taille moyenne de particules D₅₀, que l'on peut obtenir par polymérisation d'un mélange de monomères constitué de
(C11) 65 à 89,9% en poids, par rapport à (C1), d'un 1,3-diène,
(C12) 10 à 34,9% en poids, par rapport à (C1), d'un monomère vinylaromatique
et
(C13) 0,1 à 5% en poids, par rapport à (C1), d'un polymère d'agglomération
et
(C2) 5 à 20% en poids, par rapport à (C), d'une première enveloppe de greffage, que l'on peut obtenir par polymérisation d'un mélange de monomères constitué de
(C21) 30 à 39% en poids, par rapport à (C2), d'un monomère vinylaromatique,
(C22) 61 à 70% en poids, par rapport à (C2), d'un ester alkylique en C₁ à C₈ de l'acide méthacrylique, et
(C23) 0 à 3% en poids, par rapport à (C2), d'un monomère réticulant,
et
(C3) 5 à 20% en poids, par rapport à (C), d'une deuxième enveloppe de greffage, que l'on peut obtenir par polymérisation d'un mélange de monomères constitué de
(C31)70 à 98% en poids, par rapport à (C3), d'un ester alkylique en C₁ à C₈ de l'acide méthacrylique et
(C32)2 à 30% en poids, par rapport à (C3), d'un ester alkylique en C₁ à C₈ de l'acide acrylique,
et
(D) le cas échéant des additifs usuels en des quantités allant jusqu'à 20% en poids, par rapport à la somme des composants (A), (B) et (C),
à la condition que le rapport pondéral de (C2) à (C3) soit de l'ordre de 2:1 à 1:2,
par mélange des composants (A), (B), (C) et le cas échéant (D) dans la masse fondue.

8. Utilisation des matières moulables thermoplastiques suivant l'une quelconque des revendications 1 à 6 pour la préparation de corps façonnés.

9. Corps façonnés contenant des matières moulables thermoplastiques suivant l'une quelconque des revendications 1 à 6.
